# EUROPEAN PATENT SPECIFICATION

(11) **EP 1 138 004 B1**
(45) Date of publication and mention of the grant of the patent: **19.05.2004**
(21) Application number: 99956345.5
(22) Date of filing: 15.11.1999
(51) Int. Cl.: G06F 17/30

(54) **METHOD AND ELECTRONIC DATABASE SEARCH ENGINE FOR EXPLORING THE CONTENT OF AN ELECTRONIC DATABASE**
VERFAHREN UND SUCHMASCHINE FÜR EINE ELEKTRONISCHE DATENBANK ZUM ERKUNDEN DES INHALTS EINER ELEKTRONISCHEN DATENBANK
PROCEDE ET MOTEUR DE RECHERCHE POUR BASE DE DONNEES ELECTRONIQUE, PERMETTANT D'EXPLORER LE CONTENU D'UNE BASE DE DONNEES ELECTRONIQUE

(30) Priority: 07.12.1998 NL 1010741
(43) Date of publication of application: 04.10.2001
(73) Proprietor: Technische Universiteit Delft, 2628 BL Delft (NL)
(72) Inventor: STAPPERS, Pieter, Jan, NL-2611 VP Delft (NL)
(74) Representative: Van Breda, Jacobus
(86) International application number: PCT/NL1999/000697
(87) International publication number: WO 2000/034894

(56) References cited:
- MACCUISH J ET AL: "Interactive layout mechanisms for image database retrieval" VISUAL DATA EXPLORATION AND ANALYSIS III, SAN JOSE, CA, USA, 31 JAN.-2 FEB. 1996, vol. 2656, pages 104-115, XP002114739 Proceedings of the SPIE - The International Society for Optical Engineering, 1996, SPIE-Int. Soc. Opt. Eng, USA ISSN: 0277-786X cited in the application
- MASAHIRO TABUCHI ET AL: "MESOD: THE METRIC SPATIAL OBJECT DATA MODEL FOR A MULTIMEDIA APPLICATION: HYPERBOOK" INTELLECTUAL LEVERAGE, SAN FRANCISCO, FEB. 27 - MAR. 3, 1989, no. CONF. 34, 27 February 1989 (1989-02-27), pages 396-401, XP000120210 INSTITUTE OF ELECTRICAL AND ELECTRONICS ENGINEERS ISBN: 0-8186-1909-0
- OLSEN K A ET AL: "VISUALIZATION OF A DOCUMENT COLLECTION: THE VIBE SYSTEM" INFORMATION PROCESSING & MANAGEMENT (INCORPORATING INFORMATION TECHNOLOGY), vol. 29, no. 1, 1 January 1993 (1993-01-01), pages 69-81, XP000574984 ISSN: 0306-4573

## Description

The invention relates to a method and an electronic database search engine for exploring an electronic database comprising an electronic memory device suitable for storing and releasing elements from the database, a display unit, a user interface for selecting and displaying at least one element from the database on the display unit, and control means for controlling the user interface, which user interface allocates icons to the elements of the database, which icons are suitable for display on the display unit at mutual distances that depend on the elements' degree of dissimilarity, wherein the user interface at initial utilization displays at least some icons on the display unit.

Such a method and device are disclosed in the article "Interactive Layout Mechanisms for Image Database Retrieval" by John MacCuish et al. dated 29 January 1996, published in SPIE, vol. 2656, pp. 104-115. This article discloses an electronic database search engine, which uses a display unit showing objects from a database by means of icons or images in a two-dimensional plane. The mutual distance of the icons on the display area is a measure for the objects' dissimilarity. The electronic database search engine according to the article makes it possible by clicking on an image, to have the neighbouring images displayed on the display unit.

The disadvantage of the known device and method is that the spatial positioning of the elements is determined beforehand. All elements then have a fixed mutual positioning and orientation. This asks for compromises with respect to the visual presentation of the elements and their respective distances in relation to each other. Another disadvantage is that searching in the database is a rather slow process, which is partly due to the long computing time required by the known system, but more specifically to the rigid structures in which the elements are contained. This is especially true when the database requires a search strategy based on criteria that are subjective or that cannot readily, or not at all be objectified.

This is important since nowadays more and more collections and catalogues are indexed electronically. Examples of this are not only libraries and museum collections, but also catalogues of wines, films, music, paint colours, holiday destinations, and other products that are often assessed subjectively. State of the art search systems can help the user to (re)locate an exactly described element. However, it remains difficult for users to find the correct element in a collection of subjective criteria.

The state of the art solves the problem (searching on a subjective criterion) by having the user select search terms from lists (menu selection) or indicating linguistic search profiles. This works well if the user searches an already known element, and he or she is familiar with the name or the desired attributes. In many situations, such as when searching new elements based on "taste" or intuition, the effectiveness of these search profiles is inadequate. Often laborious verbal dialogues in specialist jargon have to take place in order to try and obtain examples from the collection on the display. The dialogue requires that the user have knowledge of the definitions for the attributes stored with the elements (for example in the case of music: the genre, price, and performers).

It is the object of the invention to improve this. To this end the electronic database device and method according to the invention are characterized in that with the control means any arbitrary position can be selected on the display unit and in that, depending on the control means, the user interface displays or removes an icon that relates to an element of the database and of which the degree of dissimilarity, in respect of the elements whose corresponding icons are displayed elsewhere on the display unit, corresponds with the distance taken up by the selected position in relation to the icons displayed elsewhere on the display unit.

In this way it becomes possible to search in a database on the basis of criteria that are subjective or that cannot readily, or not at all, be objectified.

According to the invention an interactive manner of searching in the automized databank is provided, in which the user spatially indicates the relationship between his searched-for element and the selected examples from the collection. The dialogue may be graphical with a two- or three-dimensional display, in which a selection of elements is shown. The mutual distance between the elements displayed by means of icons demonstrates the similarity between the elements according to a criterion, which preferably is selected by the user. The user may search by asking for further information from selected icons, by removing icons, or by calling up a new element at positions between the icons. When searching in this manner, it is not necessary to know the attributed name. It is, however, possible to extend the method, in order to also support linguistic interaction.

An important advantage of the invention is that it allows rapid and direct search in a database comprising very different elements, without the necessity of going to the desired sub-collection via related characteristics or attributes of a preceding sub-collection.

After the addition or removal of icons, it is desirable according to the invention, for the user interface to adjust the mutual positioning of the icons on the display unit in concurrence with the mutual dissimilarity of the elements from the database such as to concur with the displayed icons, in order to optimize the display area usable on the display unit. Visually, such adjustments may take place both instantaneously and gradually. It should be noted, that the positioning of the displayed elements on the display unit is always scaled such that the possibility of reaching elements of greater dissimilarity remains open by calling up such an element at the periphery of the display unit.

Under certain search conditions it may be convenient that the user interface provides means for placing a selected icon permanently in the centre of the display unit, while the remaining displayed icons are subsequently grouped around it.

In the method and device according to the invention, use may be made of a conventional graphical display unit, where the user, by means of a mouse, pen or by application of a touch screen, is able to "touch" positions on a display. At the beginning of the search, the display shows a small number of examples from the database. The elements shown on the display exhibit simulated, "self-organizing" behaviour: they endeavour to position at mutual distances that correspond to the degree of dissimilarity of the attributes stored per element. When the user "clicks" on a position on the display, the user interface determines the distances between the click position and the positions of the elements already displayed. It then searches in the database for an element that exhibits the same degree of dissimilarity regarding said elements. That element then appears at the clicked-on position on the display. By clicking on the display closely to a particular element, the user searches a new element that closely resembles that particular element. By clicking on a far-removed portion, the user obtains a very dissimilar new element. When a new element has appeared, the user interface ensures that the elements adjust their mutual positions, thereby changing the visual configuration. The user can also remove elements by "dragging" them off the display. This creates more space on the display so that it is possible, as it were, to zoom in. It is also possible to call up further information for each displayed element, for example, by clicking on twice or by dragging it to a specific position on the display. This dialogue allows the user to navigate through the database in order to arrive at those elements, which best answer his search.

The invention optimally takes into account the capacity that users have of intuitively assessing the vague relationships between elements from the database, instead of using the less developed capacity of comparison to compare abstractly described ideas relating to said elements.

It may be desirable to add to the elements of the database characteristics that are involved when determining the elements' degree of dissimilarity, and to make the assessment of the dissimilarities between the various characteristics of the elements adjustable. This would provide the user with a simple manner to adjust the search to his requirements.

The electronic database search engine according to the invention can be applied in various ways. It would be conceivable to apply the device as taste searcher for consumers trying to make a selection from wines, holiday destinations, recipes, herbs, paint colours, music, films, and the like, so that the device with such a goal may find application in shops. The device according to the invention may also be used as remotely positioned databank, presented on the information supply market by publishers or other service providers.

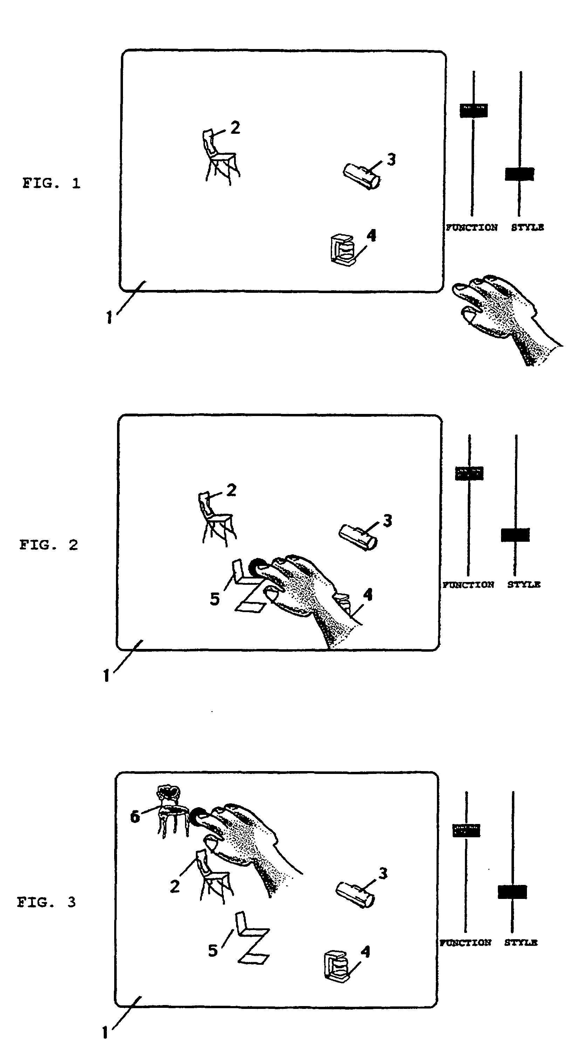

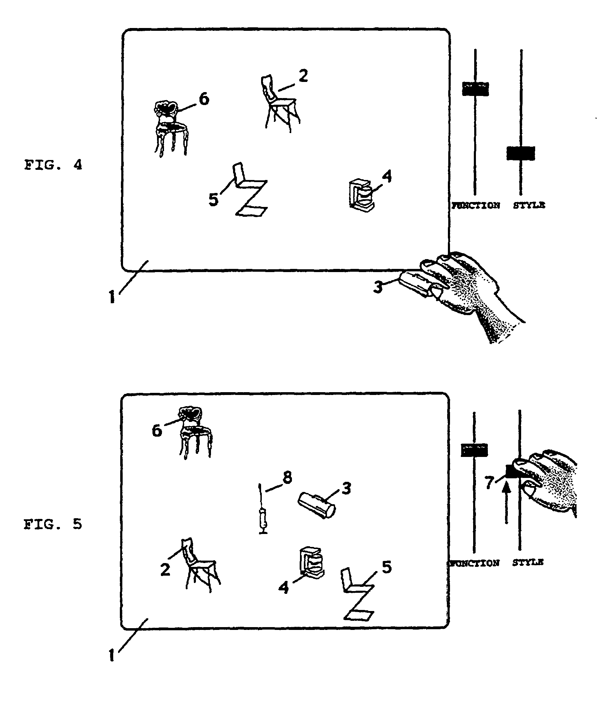

The invention will now be elucidated with reference to a drawing, which in the Figs. 1 to 5 shows a non-limitative example of the application of the electronic database search engine according to the invention.

The Figs. 1 to 5 schematically show a display such as will be observed by the user of a database search engine. The display unit 1 co-operates with an electronic memory device, suitable for storing and releasing elements from the database. To this end the display unit 1 is coupled to a user interface serving as intermediary between the display unit and the database, and serving for the selection and display of elements from the database on the display unit 1.

To this end the user interface allocates icons to elements from the database such as shown, for example, in Fig. 1, in the form of a chair 2, a vacuum cleaner 3, and a coffee maker 4. In the case illustrated, the database is formed by elements that are found in a domestic situation. Starting with the elements as shown in Fig. 1, a user can now touch any arbitrary location 5 on the display unit as shown in Fig 2. At this location 5, an element from the database will then be shown by means of an icon relating to said element, whose degree of dissimilarity in relation to the elements 2, 3 and 4 already displayed on the display unit 1, corresponds with the distance assumed by the various elements and the touched area 5 on the display unit.

Fig. 3 shows a similar action, where in the left top corner of the display unit 1 an arbitrary area 6 is touched.

Fig. 4 shows that the icon 3, relating to the vacuum cleaner, is removed from the display after which, as is clearly shown in Fig. 4, the elements 2, 4, 5 and 6 remaining on the display unit 1, regroup with respect to their mutual positioning.

Fig. 5 indicates that the criterion, by which the degree of dissimilarity of the displayed elements is assessed, can be influenced. For example, in the case shown this involves a style aspect. By allowing this style aspect, which is controllable with a slide control 7, to carry more weight, style-related elements can be clustered on the display unit 1. This relates to the vacuum cleaner 3, the coffee maker 4, the chair 5, and the vacuum cleaner 8, shown in Fig. 5. The chairs 2 and 6 show obvious style differences, and are displayed at a greater distance from chain 5.

## Claims

1. An electronic database search engine comprising an electronic memory device suitable for storing and releasing elements from the database, a display unit, a user interface for selecting and displaying at least one element from the database on the display unit, and control means for controlling the user interface, which user interface allocates icons to the elements of the database, which icons are suitable for display on the display unit at mutual distances that depend on the elements' degree of dissimilarity, wherein the user interface at initial utilization displays at least some icons on the display unit, **characterized in that** with the control means any arbitrary position can be selected on the display unit and **in that**, depending on the control means, the user interface displays or removes an icon that relates to an element of the database and of which the degree of dissimilarity, in respect of the elements whose corresponding icons are displayed elsewhere on the display unit, corresponds with the distance taken up by the selected position in relation to the icons displayed elsewhere on the display unit.

2. An electronic database search engine according to claim 1, **characterized in that** the user interface adjusts the mutual positioning of the icons on the display unit in concurrence with the mutual dissimilarity of the elements from the database such as to concur with the displayed icons, in order to optimize the display area usable on the display unit.

3. An electronic database search engine according to claim 1 or 2, **characterized in that** the user interface provides means for placing a selected icon permanently in the centre of the display unit, while the remaining displayed icons are subsequently grouped around it.

4. An electronic database search engine according to one of the claims 1-3, **characterized in that** to the elements of the database characteristics are added that are involved in determining the elements degree of dissimilarity, and that the assessment of the dissimilarities between the various characteristics of the elements is adjustable.

5. A method for exploring an electronic database using an electronic database search engine, comprising an electronic memory device, a display unit and a user interface for selecting and displaying at least one element from the database on the display unit, and further control means for controlling the user interface, which user interface allocates icons to the elements of the database, and at initial utilization displays at least some icons on the display unit at mutual distances that depend on the degree of dissimilarity of the elements of the database that are represented by said icons, **characterized in that** with the control means any arbitrary position can be selected on the display unit and **in that**, depending on the control means, the user interface displays or removes an icon that relates to an element of the database and of which the degree of dissimilarity, in respect of the elements whose corresponding icons are displayed elsewhere on the display unit, corresponds with the distance taken up by the selected position in relation to the icons displayed elsewhere on the display unit.

6. A method according to claim 5, **characterized in that** the user interface adjusts the mutual positioning of the icons on the display unit in concurrence with the mutual dissimilarity of the elements from the database such as to concur with the displayed icons, in order to optimize the display area usable on the display unit.

7. A method according to claim 5 or 6, **characterized in that** the user interface provides means for placing a selected icon permanently in the centre of the display unit, while the remaining displayed icons are subsequently grouped around it.

8. A method according to one of the claims 5-7, **characterized in that** to the elements of the database characteristics are added that are involved when determining the elements' degree of dissimilarity, and that the assessment of the dissimilarities between the various characteristics of the elements is adjustable.

## Patentansprüche

1. Suchmaschine für eine elektronische Datenbank, umfassend eine elektronische Speichervorrichtung zum Speichern und zur Ausgabe von Elementen aus der Datenbank, eine Displayeinheit, eine Nutzeroberfläche zur Auswahl und zur Anzeige mindestens eines Elementes aus der Datenbank auf der Displayeinheit sowie eine Steuereinrichtung zur Steuerung der Nutzeroberfläche, wobei die Nutzeroberfläche den Elementen der Datenbank Icons zuordnet, und die Icons zur Anzeige auf der Displayeinheit geeignet sind, in Abständen voneinander, welche vom Grad der Verschiedenartigkeit der Elemente abhängen, und die Nutzeroberfläche bei der anfänglichen Nutzung mindestens einige Icons auf der Displayeinheit anzeigt, **dadurch gekennzeichnet, dass** mit der Steuereinrichtung jede beliebige Position auf der Anzeigeeinheit gewählt werden kann, und dadurch, dass in Abhängigkeit von der Steuereinrichtung die Nutzeroberfläche ein Icon anzeigt oder entfernt, welches sich auf ein Element der Datenbank bezieht, und bei welchem der Grad der Verschiedenartigkeit in Bezug zu den Elementen, deren entsprechende Icons an anderer Stelle auf der Displayeinheit angezeigt werden, mit dem Abstand übereinstimmt, welcher durch die gewählte Position in Bezug zu den an anderer Stelle auf der Displayeinheit angezeigten Icons entsteht.

2. Suchmaschine für eine elektronische Datenbank nach Anspruch 1, **dadurch gekennzeichnet, dass** die Nutzeroberfläche die gegenseitige Positionierung der Icons auf der Displayeinheit in Übereinstimmung mit der gegenseitigen Verschiedenartigkeit der Elemente von der Datenbank so anpasst, dass sie mit den angezeigtem Icons zusammenkommen, um die auf der Displayeinheit nutzbare Anzeigefläche zu optimieren.

3. Suchmaschine für eine elektronische Datenbank nach Anspruch 1 oder 2, **dadurch gekennzeichnet, dass** die Nutzeroberfläche Mittel vorsieht, um ein ausgewähltes Icon ständig in der Mitte der Displayeinheit anzuordnen, während die verbleibenden angezeigten Icons nachfolgend um dieses gruppiert werden.

4. Suchmaschine für eine elektronische Datenbank nach einem der Ansprüche 1 bis 3, **dadurch gekennzeichnet, dass** zu den Elementen der Datenbank charakteristische Merkmale hinzugefügt werden, die mit der Bestimmung des Grades der Verschiedenartigkeit der Elemente in Verbindung stehen, und dass die Bewertung der Verschiedenartigkeiten zwischen den verschiedenen Merkmalen der Elemente justierbar ist.

5. Verfahren zum Erkunden des Inhalts einer elektronischen Datenbank unter Verwendung einer Suchmaschine für eine elektronische Datenbank, umfassend eine elektronische Speichervorrichtung, eine Displayeinheit und eine Nutzeroberfläche zur Auswahl und Anzeige mindestens eines Elementes von der Datenbank auf der Displayeinheit, sowie weiterhin eine Steuereinrichtung zur Steuerung der Nutzeroberfläche, wobei die Nutzeroberfläche den Elementen der Datenbank Icons zuordnet und bei der anfänglichen Nutzung mindestens einige Icons auf der Displayeinheit im gegenseitigen Abständen anzeigt, welche von dem Grad der Verschiedenartigkeit der Elemente der Datenbank abhängen, die durch die Icons dargestellt werden, **dadurch gekennzeichnet, dass** mit der Steuereinrichtung jede beliebige Position auf der Displayeinheit gewählt werden kann, und dadurch, dass in Abhängigkeit von der Steuereinrichtung die Nutzeroberfläche ein Icon anzeigt oder entfernt, welches sich auf ein Element der Datenbank bezieht, wobei der Grad der Verschiedenartigkeit in Bezug zu den Elementen, deren Icons auf der Displayeinheit an anderer Stelle angezeigt werden, mit dem Abstand übereinstimmt, welcher durch die gewählte Position in Bezug zu den an anderer Stelle auf der Displayeinheit angezeigten Icons entsteht.

6. Verfahren nach Anspruch 5, **dadurch gekennzeichnet, dass** die Nutzeroberfläche die gegenseitige Positionierung der Icons auf der Displayeinheit in Übereinstimmung mit der gegenseitigen Verschiedenartigkeit der Elemente von der Datenbank so anpasst, dass sie mit den angezeigten Icons zusammenkommen, um die auf der Displayeinheit nutzbare Anzeigefläche zu optimieren.

7. Verfahren nach Anspruch 5 oder 6, **dadurch gekennzeichnet dass** die Nutzeroberfläche Mittel vorsieht, um ein ausgewähltes Icon ständig in der Mitte der Displayeinheit anzuordnen, während die verbleibenden angezeigten Icons nachfolgend um dieses gruppiert werden.

8. Verfahren nach einem der Ansprüche 5 bis 7, **dadurch gekennzeichnet, dass** zu den Elementen der Datenbank charakteristische Merkmale hinzugefügt werden, welche in Anspruch genommen werden, wenn der Grad der Verschiedenartigkeit der Elemente bestimmt wird, und dass die Bewertung der Verschiedenartigkeiten zwischen den verschiedenen Merkmalen der Elemente justierbar ist.

## Revendications

1. Moteur de recherche pour base de données électronique comprenant un dispositif de mémoire électronique approprié pour stocker et diffuser des éléments provenant de la base de données, une unité d'affichage, une interface utilisateur pour sélectionner et afficher au moins un élément de la base de données sur l'unité d'affichage, et des moyens de commande pour commander l'interface utilisateur, dont l'interface utilisateur attribue des icônes aux éléments de la base de données, dont les icônes sont appropriées pour s'afficher sur l'unité d'affichage à des distances mutuelles qui dépendent du degré de dissemblance des éléments, dans lequel l'interface utilisateur au niveau de l'utilisation initiale affiche au moins certaines icônes sur l'unité d'affichage, **caractérisé en ce qu'**avec les moyens de commande, on peut sélectionner n'importe quelle position arbitraire sur l'unité d'affichage et **en ce que**, selon les moyens de commande, l'interface utilisateur affiche ou retire une icône qui concerne un élément de la base de données et dont le degré de dissemblance, par rapport aux éléments dont les icônes correspondantes sont affichées ailleurs sur l'unité d'affichage, correspond à la distance occupée par la position sélectionnée par rapport aux icônes affichées ailleurs sur l'unité d'affichage.

2. Moteur de recherche pour base de données électronique selon la revendication 1, **caractérisé en ce que** l'interface utilisateur règle le positionnement mutuel des icônes sur l'unité d'affichage en accord avec la dissemblance mutuelle des éléments de la base de données de sorte à coincider avec les icônes affichées, afin d'optimiser la surface d'affichage utilisable sur l'unité d'affichage.

3. Moteur de recherche pour base de données électronique selon la revendication 1 ou 2, **caractérisé en ce que** l'interface utilisateur propose des moyens pour placer une icône sélectionnée de manière permanente au centre de l'unité d'affichage, alors que les icônes affichées restantes sont successivement groupées autour de celle-ci.

4. Moteur de recherche pour base de données électronique selon l'une quelconque des revendications 1 - 3, **caractérisé en ce que** l'on ajoute des caractéristiques aux éléments de la base de données, qui sont impliquées dans la détermination du degré de dissemblance des éléments et **en ce que** l'on peut ajuster l'estimation des dissemblances entre les différentes caractéristiques des éléments.

5. Procédé permettant d'explorer une base de données électronique qui utilise un moteur de recherche, comprenant un dispositif de mémoire électronique, une unité d'affichage et une interface utilisateur pour sélectionner et afficher au moins un élément de la base de données sur l'unité d'affichage, et en outre des moyens de commande pour commander l'interface utilisateur, dont l'interface utilisateur attribue des icônes aux éléments de la base de données, et au niveau de l'utilisation initiale affiche au moins certaines icônes sur l'unité d'affichage à des distances mutuelles qui dépendent du degré de dissemblance des éléments de la base de données qui sont représentés par lesdites icônes,
**caractérisé en ce qu'**avec les moyens de commande, on peut sélectionner n'importe quelle position arbitraire sur l'unité d'affichage et **en ce que**, selon les moyens de commande, l'interface utilisateur affiche ou retire une icône qui concerne un élément de la base de données et dont le degré de dissemblance, par rapport aux éléments dont les icônes correspondantes sont affichées ailleurs sur l'unité d'affichage, correspond à la distance occupée par la position sélectionnée par rapport aux icônes affichées ailleurs sur l'unité d'affichage.

6. Procédé selon la revendication 5, **caractérisé en ce que** l'interface utilisateur ajuste le positionnement mutuel des icônes sur l'unité d'affichage en accord avec la dissemblance mutuelle des éléments de la base de données de sorte à coïncider avec les icônes affichées, afin d'optimiser la surface d'affichage utilisable sur l'unité d'affichage.

7. Procédé selon la revendication 5 ou 6. **caractérise en ce que** l'interface utilisateur propose des moyens pour placer une icône sélectionnée de manière permanente au centre de l'unité d'affichage, alors que les icônes affichées restantes sont successivement groupées autour de celle-ci.

8. Procédé selon l'une quelconque des revendications 5 - 7, **caractérisé en ce que** l'on ajoute des caractéristiques aux éléments de la base de données, qui sont impliquées lors de la détermination du degré de dissemblance des éléments, et **en ce que** l'on peut ajuster l'estimation des dissemblances entre les différentes caractéristiques des éléments.
